# EUROPÄISCHE PATENTSCHRIFT

(11) **EP 4 021 764 B1**
(45) Veröffentlichungstag und Bekanntmachung des Hinweises auf die Patenterteilung: **13.09.2023**
(21) Anmeldenummer: 20753690.5
(22) Anmeldetag: 29.07.2020
(51) Int. Cl.: B60R 21/261

(54) **BAUGRUPPE AUS EINER ABDECKKAPPE EINES ROHRGASGENERATORS UND EINEM DEFLEKTORELEMENT, ROHRGASGENERATOR UND VERFAHREN ZUR HERSTELLUNG EINES ROHRGASGENERATORS**
ASSEMBLY OF A COVERING CAP OF A TUBULAR GAS GENERATOR AND A DEFLECTOR ELEMENT, TUBULAR GAS GENERATOR AND METHOD FOR PRODUCING A TUBULAR GAS GENERATOR
ENSEMBLE CONSTITUÉ D'UNE STRUCTURE DE RECOUVREMENT D'UN GÉNÉRATEUR DE GAZ TUBULAIRE ET D'UN ÉLÉMENT DÉFLECTEUR, GÉNÉRATEUR DE GAZ TUBULAIRE ET PROCÉDÉ DE PRODUCTION D'UN GÉNÉRATEUR DE GAZ TUBULAIRE

(30) Priorität: 27.08.2019 DE 102019122992
(43) Veröffentlichungstag der Anmeldung: 06.07.2022
(73) Patentinhaber: ZF Airbag Germany GmbH, 84544 Aschau a. Inn (DE)
(72) Erfinder: JUNG, Christian, 84453 Mühldorf am Inn (DE); KAPFELSPERGER, Thomas, 84453 Mühldorf am Inn (DE); SCHMÖKEL, Michael, 84489 Burghausen (DE)
(74) Vertreter: ZF Patentabteilung - DIPS
(86) Internationale Anmeldenummer: PCT/EP2020/071389
(87) Internationale Veröffentlichungsnummer: WO 2021/037468

(56) Entgegenhaltungen:
- DE-A1-102008 063 789
- GB-A- 2 406 312

## Beschreibung

Die Erfindung betrifft eine Baugruppe aus einer Abdeckkappe eines Rohrgasgenerators und einem Deflektorelement, einen Rohrgasgenerator mit einer derartigen Baugruppe und ein Verfahren zur Herstellung eines Rohrgasgenerators.

Bei langgestreckten Gasgeneratoren, die auch als Rohrgasgeneratoren bezeichnet werden, verlässt das bei der Aktivierung erzeugte Gas durch einen Ausströmbereich mit einer oder mehreren Gasauslassöffnungen den Gasgenerator. Der Ausströmbereich ist oft an einem axialen Ende des Rohrgasgenerators vorgesehen.

In einer möglichen Variante ist der Ausströmbereich direkt in einer Außenwand des Gasgenerators ausgebildet.

Es ist auch bekannt, den Ausströmbereich alternativ durch einen an einem axialen Ende des Gasgenerators fest montierten Diffusor zu realisieren, der in seiner Umfangswand eine Vielzahl von Gasauslassöffnungen aufweist. Der Diffusor wird in dieser Variante als Bestandteil des Gasgenerators gesehen.

Die Gasauslassöffnungen sind in der Regel gleichmäßig über den Umfang des Diffusors oder des Gasgenerators verteilt, um den Gasgenerator bei dessen Aktivierung schubneutral zu halten, wobei das Gas meist in Radialrichtung abströmt.

Bei vielen Gassackmodulen ist der Rohrgasgenerator so angeordnet, dass sein Ausströmbereich im Inneren des aufblasbaren Volumens eines Gassacks liegt. Dieses Design findet sich beispielsweise bei vorhangartigen Seitengassäcken oder auch bei Seitengassäcken, die in einer Rückenlehne eines Fahrzeugsitzes verbaut sind.

Jedoch ist oft eine radiale Gasabströmung nachteilig, da hierdurch ein gezieltes Befüllen einzelner Gassäcke oder einzelner Kammern eines Gassacks erschwert ist. Auch das aus dem Rohrgasgenerator austretende Gas in mehrere Gasströme aufzuteilen gestaltet sich schwierig.

Hierzu ist beispielsweise bekannt, eine spezielle Gewebelage vorzusehen, die den Ausströmbereich des Rohrgasgenerators in Umfangsrichtung umgibt und die sowohl das Gassackgewebe vor dem austretenden Gas schützt als auch den Gasstrom in Axialrichtung umlenkt. Eine gezielte Aufteilung des Gasstroms ist aufgrund der Flexibilität der Gewebelage jedoch nicht möglich.

Auch ist es bekannt, eine sogenannte Gaslanze vorzusehen, die ein an beiden Enden offenes Rohrstück aufweist und die axial an einen Rohrgasgenerator angesetzt wird, um das ausströmende Gas über eine Distanz von mehreren Dezimetern zu einem entfernt vom Rohrgasgenerator angeordneten Gassack zu überführen. So lässt sich zwar ein gerichteter Gasstrom in den Gassack erzeugen, jedoch ist es nicht möglich, den Ausströmbereich des Rohrgasgenerators unmittelbar am oder im Gassack anzuordnen, wodurch sich unweigerlich die Abmessung des Gassackmoduls vergrößert.

Außerdem muss für die Verwendung in verschiedenen Gassackmodulen stets aufwendig die gesamte Gasführung angepasst werden.

Die gattungsbildende DE 10 2008 063 789 A1 offenbart eine Baugruppe bestehend aus einer Abdeckkappe eines Rohrgenerators und einem Deflektorelement.

Aufgabe der Erfindung ist es, eine flexible Möglichkeit zu schaffen, um das aus dem Rohrgasgenerator ausströmende Gas zu seinem Einsatzort zu leiten, bei kleinem Baumaß, guten Anpassungsmöglichkeiten an unterschiedliche Geometrien und mit geringen Fertigungskosten sowie mit der Option, den Gasstrom in mehrere Gasströme aufteilen zu können.

Diese Aufgabe wird mit einer Baugruppe mit den Merkmalen des Anspruchs 1 gelöst. Die Baugruppe besteht aus einer Abdeckkappe eines Rohrgasgenerators und einem Deflektorelement, das aus wenigstens einer Ausströmöffnung der Abdeckkappe ausströmendes Gas zu wenigstens einer Abströmöffnung des Deflektorelements umleitet, wobei eine Ablenkfläche des Deflektorelements radial auswärts der Ausströmöffnung angeordnet ist. Wenigstens zwei Befestigungsarme des Deflektorelements erstrecken sich durch die Ausströmöffnung hindurch und hintergreifen einen die Ausströmöffnung definierenden Rand innenseitig in einer formschlüssigen Verbindung mit der Abdeckkappe.

Mittels des Deflektorelements ist es möglich, das radial aus dem Rohrgasgenerator ausströmende Gas in eine andere Richtung, insbesondere entlang der Axialrichtung des Rohrgasgenerators, umzulenken, was für viele Anwendungszwecke günstiger ist. Beispielsweise kann die Baugruppe für einen Rohrgasgenerator eines Seitengassackmoduls mit einem vorhangartigen Seitengassack eingesetzt werden, bei dem durch die Gasumlenkung durch das Deflektorelement eine schonendere Gaseinleitung möglich ist.

Wenn das Deflektorelement mehrere Abströmöffnungen aufweist, lässt sich auch eine Aufteilung des aus dem Rohrgasgenerator austretenden Gases in mehrere gegebenenfalls unterschiedliche Gasmengen umfassende Gasströme auf einfache Weise erreichen, um z.B. mehrere Kammern eines Gassacks zu befüllen.

In dem Fall, dass der Rohrgasgenerator einen Diffusor aufweist, sollte die Abdeckkappe an dem axialen Ende des Rohrgasgenerators angeordnet sein, an dem auch der Diffusor vorgesehen ist, wobei die Abdeckkappe in der Regel den Diffusor in Axialrichtung und in Umfangsrichtung vollständig überdeckt und/oder diesen mit Abstand umgibt.

Es ist jedoch nicht zwingend notwendig, zusätzlich zu der erfindungsgemäßen Baugruppe noch einen separaten Diffusor vorzusehen, denn die Baugruppe kann für sich alleine die Aufgabe einer Gasabströmung aus dem Rohrgasgenerator heraus übernehmen und dabei den eigentlichen Diffusor ersetzen. In einem derartigen Fall ohne Diffusor sollte die Abdeckkappe selbstverständlich an dem axialen Ende des Rohrgasgenerators, aus dem Gas ausströmen kann, angeordnet sein.

Die Abdeckkappe ist ein vom Rohrgasgenerator zunächst separates Bauteil und wird separat von diesem gefertigt. Die Abdeckkappe ist bevorzugt ein einstückiges Bauteil.

Das Deflektorelement ist separat von der Abdeckkappe gefertigt und ist zunächst ein von dieser separates Bauteil. Das Deflektorelement ist vorzugsweise einstückig.

Die Abdeckkappe ist bevorzugt rohrförmig und weist ein offenes Ende auf, das über das axiale Ende des Rohrgasgenerators oder über den Diffusor des Rohrgasgenerators geschoben wird und am Rohrgasgenerator fest fixiert wird. Das entgegengesetzte Ende der Abdeckkappe ist bevorzugt gasdicht verschlossen, sodass das bei der Aktivierung des Rohrgasgenerators aus diesem austretende Gas vorteilhaft ausschließlich durch die Ausströmöffnung(en) der Abdeckkappe und das Deflektorelement in die Umgebung des Rohrgasgenerators, beispielsweise in einen Gassack, gelangt.

Axialrichtung und Radialrichtung beziehen sich in dieser Anmeldung stets auf die Längsachse des Rohrgasgenerators, die mit der Längsachse der Abdeckkappe zusammenfällt, wenn diese am Rohrgasgenerator montiert ist.

Die Ablenkfläche des Deflektorelements überdeckt vorteilhaft die Ausströmöffnung der Abdeckkappe komplett, um sämtliches durch die Ausströmöffnung austretendes Gas in eine gewünschte Richtung umzulenken.

Es hat sich herausgestellt, dass neben der formschlüssigen Verbindung durch das Hintergreifen des Rands der Ausströmöffnung keine zusätzliche Befestigung des Deflektorelements an der Abdeckkappe notwendig ist. So lässt sich das Deflektorelement schnell und somit kostengünstig an der Abdeckkappe anbringen. Natürlich ist es denkbar, trotzdem eine zusätzliche Befestigung, beispielsweise durch Kleben oder Schweißen, vorzusehen.

In einer bevorzugten Variante weist die Ausströmöffnung eine rechteckige Fläche auf und ist insbesondere schlitzförmig. In diesem Fall greifen die Befestigungsarme vorzugsweise an gegenüberliegenden Randabschnitten an, die an den langen Seiten der Ausströmöffnung liegen.

Die Befestigungsarme können bezüglich einer Längserstreckung des Deflektorelements in etwa in der Mitte des Deflektorelement angeordnet sein, um eine gleichmäßige Belastung der Befestigungsarme bei der Aktivierung des Rohrgasgenerators zu erreichen.

Vorzugsweise erstrecken sich die Befestigungsarme an gegenüberliegenden Seiten der Ablenkfläche.

Die freien Enden der Befestigungsarme sind bevorzugt abgewinkelt und liegen am Rand der Ausströmöffnung, insbesondere an gegenüberliegenden Randabschnitten der Ausströmöffnung, an einer Innenseite der Wandung der Abdeckkappe an.

Die formschlüssige Verbindung kann ein einfaches Hintergreifen des Randes der Ausströmöffnung der Abdeckkappe sein, aber auch eine Rastverbindung oder eine Bajonettverbindung. Die abgewinkelten freien Enden der Befestigungsarme bilden dann beispielsweise Rastelemente oder die Elemente der Bajonettverbindung.

Wenn das Deflektorelement quer zu seiner Längserstreckung elastisch verformbar ist, kann es einfach von außen an der Ausströmöffnung montiert werden, indem die Befestigungsarme mit einer Montagekraft zusammengedrückt und durch die Ausströmöffnung in das Innere der Abdeckkappe geschoben werden. Der Formschluss mit dem Rand der Ausströmöffnung wird dann durch das Auseinanderfedern der Befestigungsarme mit dem Wegfall der Montagekraft hergestellt.

Um eine gute Verbindung zwischen Deflektorelement und Abdeckkappe zu erreichen und um eine ausreichende Gasdichtigkeit zwischen Deflektorelement und Abdeckkappe herzustellen, können sich in dieser Variante die Befestigungsarme über 50 % oder mehr der Länge des Deflektorelements entlang der Längsrichtung der Abdeckkappe erstrecken. Vorzugsweise sind die Befestigungsarme entlang der Axialrichtung genauso lang wie die Ausströmöffnung.

Soll das Deflektorelement durch eine Bajonettverbindung befestigt werden, muss es nicht nennenswert elastisch verformbar sein. Allerdings ist eine elastische Verformbarkeit der Befestigungsarme zur Erzeugung einer Vorspannung günstig.

Ein Vorteil ist hier, dass zur Montage keine temporäre mechanische Verformung, wie eine elastische Verformung der Befestigungsarme, an dem Deflektorelement vorgenommen werden muss. Damit können für das Deflektorelement günstigere Werkstoffe mit beispielsweise dünnwandigerem Material verwendet werden.

Auch in diesem Fall ist das Deflektorelement aber von außen montierbar, indem in einer ersten Ausrichtung die Befestigungsarme durch die Ausströmöffnung geschoben werden und anschließend der Formschluss durch eine Drehung des Deflektorelements entsteht.

In diesem Fall sollten die Befestigungsarme in Längsrichtung der Abdeckkappe kürzer gewählt. Sie können sich beispielsweise über 25 % oder weniger der Länge des Deflektorelements entlang der Längsrichtung der Abdeckkappe erstrecken. Vorteilhaft sind bei einer rechteckigen Ausströmöffnung die Befestigungsarme schmaler als die kurze Seite der Ausströmöffnung, um das Deflektorelement in einer gedrehten Orientierung in die Ausströmöffnung einsetzen zu können.

Da das Deflektorelement von außen durch die Ausströmöffnung der Abdeckkappe montierbar ist, ist es möglich, zunächst die Abdeckkappe ohne das Deflektorelement am Rohrgasgenerator zu fixieren und erst nach diesem Schritt das Deflektorelement in die Abdeckkappe einzusetzen. Dies erlaubt beispielsweise eine kostengünstige Montage der Abdeckkappe am Rohrgasgenerator durch Rollieren.

Die Ablenkfläche des Deflektorelements ist vorzugsweise bogen- oder rinnenförmig und ist insbesondere konkav zur Abdeckkappe hin gekrümmt. Das Deflektorelement umschließt vorteilhaft einen Hohlraum zwischen der Außenseite der Abdeckkappe und der Innenseite der Ablenkfläche, in den das aus der Ausströmöffnung austretende Gas einströmt. Es ist bevorzugt, dass das Gas beider Aktivierung des Rohrgasgenerators das Deflektorelement nur durch die vorgesehene(n) Abströmöffnung(en) verlässt.

Vorzugsweise erstrecken sich Seitenflächen der Ablenkfläche beidseits einer Scheitellinie der Ablenkfläche, wobei die Scheitellinie im montierten Zustand in Axialrichtung der Abdeckkappe verläuft. Die Scheitellinie ist z. B. der von der Mittelachse der Abdeckkappe entfernteste Abschnitt des Deflektorelements.

Die Seitenflächen gehen bevorzugt in die Befestigungsarme über, wobei es zur Erzeugung einer Vorspannung vorteilhaft ist, wenn sich die Krümmung der Außenoberfläche des Deflektorelements beim Übergang von der jeweiligen Seitenfläche zum Befestigungsarm nicht ändert.

Das Deflektorelement besteht vorzugsweise aus einem umgeformten Blech und lässt sich beispielsweise aus einem einstückigen Blechzuschnitt herstellen, insbesondere aus einem Federstahl.

Der Zuschnitt umfasst die Ablenkfläche sowie die Befestigungsarme, wobei die Ablenkfläche vorzugsweise durch einen rechteckigen Abschnitt des Zuschnitts gebildet ist und die Befestigungsarme von entgegengesetzten Seiten des rechteckigen Abschnitts abstehen.

Die spätere Scheitellinie der Ablenkfläche verläuft dann mittig zwischen den beiden langen Seiten des rechteckigen Abschnitts.

Beim Umformen des Zuschnitts können die Seitenflächen beidseits der Scheitellinie aufeinander zu gebogen werden. In diesem Fall erstreckt sich vorzugsweise zumindest jeweils ein Befestigungsarm senkrecht zur Scheitellinie von jeder der langen Seite der Seitenflächen. Werden die Seitenflächen um die Scheitellinie gebogen, so bewegen sich die Befestigungsarme in eine Stellung, in der sie in etwa parallel zueinander liegen.

Die beiden Seitenflächen und/oder die Befestigungsarme sind z.B. elastisch verformbar, sodass eine federelastische Spannung hervorgerufen werden kann, die die beiden Seitenflächen nach außen vorspannt.

In dem Zustand, in dem das Deflektorelement an der Abdeckkappe montiert ist, sorgt diese Vorspannung vorzugsweise dafür, dass der Formschluss zwischen den Befestigungsarmen und dem Rand der Ausströmöffnung aufrechterhalten bleibt und die Befestigungsarme auf Spannung gegen die Ränder der Ausströmöffnung gedrückt werden.

In einem Querschnitt senkrecht zur Längsrichtung der Abdeckkappe im montierten Zustand auf Höhe der Befestigungsarme hat das Deflektorelement z. B. in etwa die Form eines Ω.

Die Montage des Deflektorelements erfolgt am einfachsten, wenn die Fläche der Ausströmöffnung rechteckig ist. Prinzipiell kann die Ausströmöffnung aber jeden beliebigen geeigneten Querschnitt aufweisen.

Bei einer rechteckigen oder schlitzförmigen Austrittsöffnung greifen die Befestigungsarme des Deflektorelements bevorzugt an gegenüberliegenden Randabschnitten der langen Seiten an, um eine gleichmäßige Befestigungskraft zu erhalten.

Es kann vorteilhaft sein, dass die Befestigungsarme voneinander weg gegen den Rand der Ausströmöffnung drücken, wenn das Deflektorelement an der Abdeckkappe montiert ist.

Sowohl die Abdeckkappe als auch das Deflektorelement sind beispielsweise aus einem geeigneten Metall gefertigt, wobei generell die Wandstärke des Deflektorelements kleiner sein kann als die der Abdeckkappe.

Das Deflektorelement hat vorzugsweise eine langgestreckte Gestalt und ist an seinen beiden axialen Enden offen, sodass an jedem axialen Ende eine Abströmöffnung gebildet ist.

Diese Geometrie ist beispielsweise nützlich, um zwei getrennte Kammern eines Gassacks oder auch zwei getrennte Gassäcke über den Rohrgasgenerator mit Füllgas zu versorgen oder den Gassack in entgegengesetzte Richtungen aufzublasen.

Die Ablenkfläche erstreckt sich normalerweise entlang der Längsrichtung beidseits über die Befestigungsarme hinaus, um die Gasführung zu verbessern.

Die Abströmöffnungen ergeben sich in diesem Fall auf einfache Weise durch die kurzen Seiten der Seitenflächen, die jeweils am axialen Ende des Deflektorelements jeweils einen Bogen beschreiben.

Im an der Abdeckkappe montierten Zustand des Deflektorelements liegen in einer Variante die freien Ränder der Seitenflächen an der Umfangswand der Abdeckkappe an und schließen somit den Hohlraum zwischen der Außenseite der Abdeckkappe und der Innenseite der Ablenkfläche gegenüber der Abdeckkappe ab.

In einer anderen Variante sind die freien Ränder der Seitenflächen aufeinander zu gebogen und bilden Röhren, die das Gas von der Ausströmöffnung zu jeweils einer der Abströmöffnungen leiten.

Der zwischen Deflektorelement und Abdeckkappe gebildete Hohlraum definiert in diesen Fällen eine Röhre, die nur an den axialen Enden zur Umgebung des Rohrgasgenerators geöffnet ist, wobei der Hohlraum mittels der Ausströmöffnung mit einem Innenraum der Abdeckkappe verbunden ist.

Die Abströmöffnungen können gleich groß und entgegengesetzt gerichtet sein, sodass die Schubneutralität des Rohrgasgenerators erhalten bleibt.

Die Ausrichtung der Abströmöffnung lässt sich jedoch auch variieren und an die gewünschte Richtung des austretenden Gasstroms anpassen.

Es ist auch denkbar, die Querschnittsflächen der beiden Abströmöffnung unterschiedlich zu wählen, um Gasströme mit verschiedenen Gasmengen, z.B. in einem Verhältnis von 60/40 oder von 70/30, zu realisieren.

Optional ist zwischen der Ausströmöffnung der Abdeckkappe und der zumindest einen Abströmöffnung des Deflektorelements ein Filter angeordnet. Dieser Filter wird vom ausströmenden Gas durchströmt und kann beispielsweise Partikel zurückhalten und/oder das ausströmende Gas kühlen. Der Filter kann der Nachfilterung des Gases dienen, könnte aber auch als Ersatz für einen Filter im Diffusor des Rohrgasgenerators oder im Rohrgasgenerator selbst verwendet werden.

Der Filter kann auf bekannte Weise ein Maschengestrick oder ein Sieb umfassen.

Zur Montage kann der Filter vor der Montage des Deflektorelements in dieses eingelegt werden oder nach der Montage des Deflektorelements an der Abdeckkappe entlang der Längsrichtung durch die Abströmöffnung in das Deflektorelement eingeschoben werden. Der Filter wird optional über Laschen an seinen Längsenden in der gewünschten Position gehalten.

In einer möglichen Variante sind zwei durch einen Mittelsteg voneinander getrennte Ausströmöffnungen in der Umfangswand der Abdeckkappe vorgesehen, und das Deflektorelement weist wenigstens vier Befestigungsarme auf, wobei jeweils zwei benachbarte Befestigungsarme beidseits des Mittelstegs am Rand der jeweiligen Ausströmöffnung angreifen. Auf diese Weise lässt sich die Gesamtfläche der Ausströmöffnungen vergrößern, ohne wesentlich an Stabilität einzubüßen, da der Mittelsteg als Zuganker für die Ränder der Ausströmöffnungen wirken kann, wenn der Rohrgasgenerator aktiviert ist.

Die oben genannte Aufgabe wird auch mit einem Rohrgasgenerator gelöst, der an einem axialen Ende wenigstens eine Gasauslassöffnung aufweist, und der mit einer Baugruppe, wie sie oben beschrieben ist, versehen ist. Die Abdeckkappe ist am Rohrgasgenerator fixiert und übergreift dessen axiales Ende. Es ist eine Sammelkammer zwischen der wenigstens einen Gasauslassöffnung und der Abdeckkappe gebildet, durch die das Gas zum Deflektorelement strömt, wenn der Rohrgasgenerator aktiviert wird. Die wenigstens eine Gasauslassöffnung kann entweder das offene axiale Ende des Rohrgasgenerators selbst sein bzw. die entsprechende Öffnung, welche sich durch ein offenes Rohr an diesem Ende ergibt, darstellen. Die wenigstens eine Gasauslassöffnung kann aber auch an der Umfangswand des Außengehäuses des Rohrgasgenerators an diesem Ende ein- bzw. angebracht sein.

Am axialen Ende des Rohrgasgenerators ist gegebenenfalls auch ein insbesondere schubneutraler Diffusor mit zahlreichen Gasauslassöffnungen an einer Umfangswand des Rohrgasgenerators bzw. an seinem axialen Ende angeordnet und kann insbesondere als eine Art axiale Verlängerung des Rohrgasgenerators aufgefasst werden. Hierbei liegt der Diffusor bezogen auf die Radialrichtung zwischen dem Rohrgasgenerator und der Abdeckkappe.

Entsprechend kann die Umfangswand, wenn sie eine oder mehrere Gasauslassöffnungen aufweist, entweder als zum Außengehäuse des Gasgenerators selbst oder zum Diffusor gehörig aufgefasst werden.

Außerdem wird die oben genannte Aufgabe auch durch ein Verfahren zur Fertigung eines Rohrgasgenerators, wie er gerade beschrieben wurde, gelöst. Das Verfahren umfasst die folgenden Schritte: die Abdeckkappe wird an einem axialen Ende des Rohrgasgenerators fest fixiert. Anschließend wird das Deflektorelement von einer Außenseite der Abdeckkappe aus mit seinen Befestigungsarmen durch die Ausströmöffnung geschoben, wobei die Befestigungsarme eine formschlüssige Verbindung mit dem Rand der Ausströmöffnung eingehen, die das Deflektorelement fest an der Abdeckkappe fixiert.

Dieses Herstellungsverfahren ermöglicht es, zunächst die Abdeckkappe am Rohrgasgenerator zu befestigen, was beispielsweise bei einer rotationssymmetrischen Abdeckkappe kostengünstig durch Rollieren geschehen kann. Natürlich sind auch andere Arten der Befestigung möglich, zum Beispiel Krimpen, Bördeln oder Schweißen.

Das Deflektorelement wird erst nachträglich eingesetzt, wobei dieses vorzugsweise nur durch eine formschlüssige Verbindung an der Abdeckkappe fixiert wird, sodass auf zeitaufwendige und kostengünstige Verfahren wie beispielsweise Löten oder Schweißen verzichtet werden kann.

Ein weiterer Vorteil ist, dass grundsätzlich nur eine einzige Geometrie für die Abdeckkappe vorgesehen sein muss, die sich für einen spezifischen Rohrgasgenerator eignet. Eine Anpassung an unterschiedliche Verwendungszwecke, beispielsweise für unterschiedliche Gassackmodule, kann einfach durch die Verwendung unterschiedlicher Deflektorelemente erreicht werden, die lediglich geeignete Befestigungsarme zum Eingriff in die Ausströmöffnung der Abdeckkappe aufweisen müssen, aber bezüglich der Geometrie der Ablenkfläche und der Abströmöffnungen auf einfache Weise an unterschiedliche Einsatzzwecke anpassbar sind.

Das Einsetzen des Deflektorelements erfolgt z. B., indem die Befestigungsarme durch eine Krafteinwirkung aufeinander zu bewegt und dabei elastisch verformt werden und nach Ende der Krafteinwirkung wieder auseinanderfedern.

Zur Montage des Deflektorelements an der Abdeckkappe werden in diesem Fall insbesondere die beiden Seitenflächen mit einer Montagekraft aufeinander zu gedrückt, bis sich die Befestigungsarme von der Außenseite der Abdeckkappe her durch die Ausströmöffnung einschieben lassen. Das Deflektorelement wird dabei elastisch verformt. Diese Vorspannung sorgt bei Nachlassen der Montagekraft dafür, dass sich die Seitenflächen und die Befestigungsarme wieder auseinanderspreizen, wobei die abgewinkelten freien Enden der Befestigungsarme den Rand der Ausströmöffnung hintergreifen.

In der Variante, in der der Formschluss der Befestigungsarme mit dem Rand der Ausströmöffnung durch eine Bajonettverbindung erreicht wird, werden die Befestigungsarme in einer ersten Orientierung in die Ausströmöffnung eingeschoben werden und anschließend unter Herstellung der Bajonettverbindung um einen vorgegebenen Winkel in eine zweite Orientierung gedreht. Die Verdrehung erfolgt vorteilhaft senkrecht zur Fläche der Ausströmöffnung, beispielsweise um etwa 90°. Dabei hintergreifen die abgewinkelten freien Enden der Befestigungsarme den Rand der Ausströmöffnung formschlüssig. Auch in diesem Fall kann die Vorspannung des Deflektorelements dafür sorgen, dass im montierten Zustand die beiden Befestigungsarme nach außen gegen den Rand der Ausströmöffnung vorgespannt bleiben, prinzipiell ist bei dieser Ausführung aber eine Vorspannung nicht notwendig.

Die Erfindung wird nachfolgend anhand mehrerer Ausführungsbeispiele und mit Bezug auf die beigefügten Figuren näher beschrieben. In den Zeichnungen zeigen:
- Figur 1 eine schematische perspektivische Darstellung einer erfindungsgemäßen Baugruppe aus einer Abdeckkappe und einem Deflektorelement gemäß einer ersten Ausführungsform, vor der Montage an einem Rohrgasgenerator;
- Figur 2 einen schematischen Längsschnitt durch die Baugruppe aus Figur 1;
- Figur 3 eine schematische Querschnittsansicht der Baugruppe aus Figur 1;
- Figur 4 einen schematischen Längsschnitt durch eine Variante der Baugruppe aus Figur 1;
- Figur 5 einen schematischen Längsschnitt durch eine weitere Variante der Baugruppe aus Figur 1;
- Figur 6 einen schematischen Längsschnitt durch noch eine weitere Variante der Baugruppe aus Figur 1;
- Figur 7 einen schematischen Längsschnitt durch noch eine weitere Variante der Baugruppe aus Figur 1;
- Figur 8 einen erfindungsgemäßen Rohrgasgenerator mit einer daran montierten erfindungsgemäßen Baugruppe aus einer Abdeckkappe und einem Deflektorelement in schematischer perspektivischer Darstellung;
- Figur 9 die Baugruppe aus Figur 8 in einer schematischen perspektivischen Darstellung;
- Figur 10 die Baugruppe aus Figur 9 in einer schematischen Querschnittsansicht;
- Figur 11 die Baugruppe aus Figur 9 in einem schematischen Längsschnitt; und
- Figur 12 das Deflektorelement der Baugruppe aus Figur 9 in einer schematischen perspektivischen Darstellung.

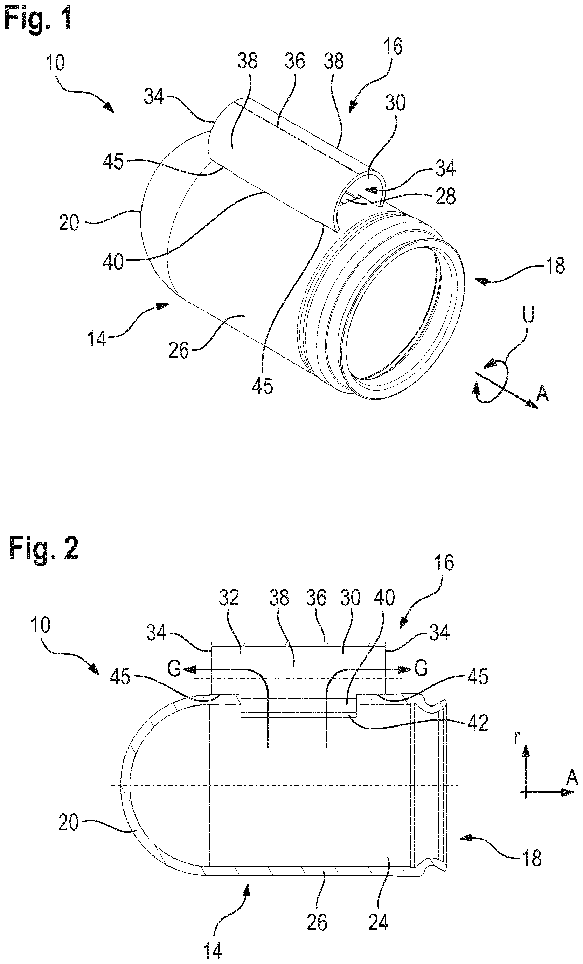

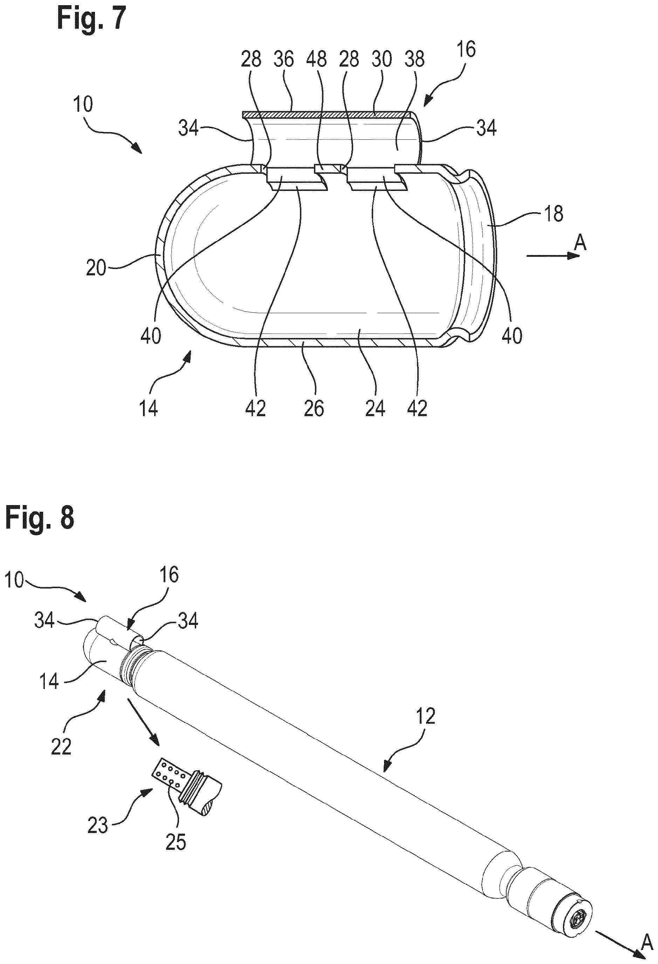

Die Figuren 1 bis 3 zeigen eine Baugruppe 10 zur Montage an einem Rohrgasgenerator 12 (siehe Figur 8). Die Baugruppe 10 besteht hier aus einer Abdeckkappe 14 und einem Deflektorelement 16.

Die Abdeckkappe 14 ist ein rotationssymmetrisches, rohrförmiges Bauteil mit einem offenen Ende 18 und einem z. B. halbkugelförmigen, geschlossenen Ende 20. Das offene Ende 18 ist dazu vorgesehen, an einem axialen Ende 22 des Rohrgasgenerators 12, z.B. an dessen Umfangswand, fest und insbesondere gasdicht fixiert zu werden. Diese Verbindung kann beispielsweise durch Rollieren, Krimpen, Bördeln oder Schweißen erfolgen.

Am axialen Ende 22 weist der Rohrgasgenerator 12 hier einen separat herausgezeichneten Diffusor 23 mit einer Vielzahl von über dessen Umfang verteilten Gasauslassöffnungen 25 auf, durch die bei der Aktivierung das Gas aus dem Rohrgasgenerator 12 austritt, siehe Figur 8. Der Diffusor 23 ist fest mit dem Außengehäuse des Rohrgasgenerators 12 verbunden und bildet hier eine vorgefertigte Einheit mit dem Rohrgasgenerator 12. Der Diffusor 23 kann dabei quasi als eine Art axiale Verlängerung des Rohrgasgenerators 12 angesehen werden.

Die Abdeckkappe 14 ist über das axiale Ende 22 des Rohrgasgenerators 12 geschoben, sodass der Diffusor 23 in einem Innenraum 24 der Abdeckkappe 14 mit Abstand zu einer Wandung, hier einer Umfangswand 26, und zum geschlossenen Ende 20 der Abdeckkappe angeordnet ist. Somit bildet sich zwischen der Außenseite des Diffusors 23 und der Innenseite der Umfangswand 26 eine Sammelkammer, in die das aus dem Diffusor 23 austretende Gas einströmt.

In einer anderen Variante ist kein Diffusor vorgesehen. In diesem Fall ist die Sammelkammer direkt zwischen einer Umfangswand des Rohrgasgenerators 12, in der wenigstens eine Gasauslassöffnung 25 vorgesehen ist, und der Umfangswand 26 der Abdeckkappe 14 gebildet. Die Baugruppe 10 übernimmt dann auch die Funktion eines Diffusors zur Lenkung und Verteilung des aus dem axialen Ende 22 des Rohrgasgenerators 12 ausströmenden Gases. Ebenso ist auch möglich, dass die wenigstens eine Gasauslassöffnung das offene axiale Ende 22 des Rohrgasgenerators 12 selbst bzw. die entsprechende Öffnung, welche sich durch ein offenes Rohr als Außengehäuse an diesem Ende ergibt, darstellt.

In der Umfangswand 26 der Abdeckkappe 14 ist eine Ausströmöffnung 28 vorgesehen. Im Beispiel der Figuren 1 bis 3 weist die Abdeckkappe 14 jeweils nur eine einzige Ausströmöffnung 28 auf, es sind aber auch Varianten mit mehreren Ausströmöffnungen 28 denkbar (siehe auch Figur 7).

Die Ausströmöffnung 28 hat hier eine rechteckige Fläche, wobei die langen Seiten des Rechtecks parallel zu einer Axialrichtung A der Abdeckkappe 14 ausgerichtet sind, die im montierten Zustand der Längsrichtung des Rohrgasgenerators 12 entspricht.

Die Querschnittsfläche der Ausströmöffnung 28 ist so groß gewählt, dass der aus dem Rohrgasgenerator 12 austretende Gasstrom ohne nennenswert erhöhten Strömungswiderstand durch die Ausströmöffnung 28 abfließen kann.

Das Deflektorelement 16 weist eine bogenförmigen Ablenkfläche 30 auf, deren konkave Innenseite zur Umfangswand 26 der Abdeckkappe 14 und der Ausströmöffnung 28 weist, sodass ein röhrenförmigen Hohlraum 32 zwischen der Ablenkfläche 30 und der Außenseite der Umfangswand 26 gebildet ist.

Die Ablenkfläche 30 liegt in Radialrichtung r außerhalb der Ausströmöffnung 28 und überdeckt diese bezogen auf die Axialrichtung A und die Umfangsrichtung U vollständig.

An seinen beiden axialen Enden ist das Deflektorelement 16 in diesem Beispiel offen, sodass an jedem axialen Ende eine Abströmöffnung 34 ausgebildet ist, die mit dem Hohlraum 32 in direkter Strömungsverbindung steht.

Die Ablenkfläche 30 ist hier so ausgerichtet, dass der röhrenförmige Hohlraum 32 entlang der Axialrichtung A verläuft.

Beidseits einer Scheitellinie 36 der Ablenkfläche 30 erstreckt sich jeweils eine Seitenfläche 38, die von der Scheitellinie 36 in Richtung zur Umfangswand 26 der Abdeckkappe 14 verläuft.

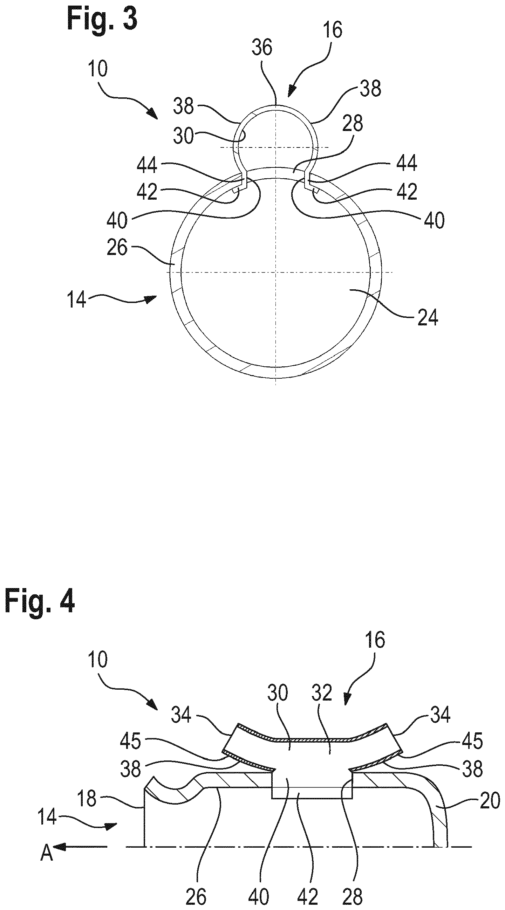

Senkrecht zur Scheitellinie 36 betrachtet gehen die Seitenflächen 38 entlang der Axialrichtung A jeweils in einem mittleren Abschnitt in einen Befestigungsarm 40 über, der der Fixierung des Deflektorelements 16 an der Abdeckkappe 14 dient, siehe Figur 3.

In Axialrichtung A erstrecken sich in dieser Ausführungsform die Befestigungsarme 40 jeweils in der Mitte der Ablenkfläche 30 und haben eine Breite von über etwa 50 % der Länge der Ablenkfläche 30 in Axialrichtung A.

Das gesamte Deflektorelement 16 ist hier aus einem einstückigen Zuschnitt aus einem Metallblech mit guter Federwirkung, beispielsweise einem Federstahl, gebogen.

Der Zuschnitt besteht aus einem rechteckigen Abschnitt, der später die Ablenkfläche 30 bildet, sowie jeweils an jedem Seitenrand einem Fortsatz, der später einen Befestigungsarm 40 bildet, wobei die langen Seiten des rechteckigen Abschnitts in die Fortsätze übergehen. Die kurzen Seiten bilden im fertigen Deflektorelement 16 die axialen Enden des Deflektorelements 16 und begrenzen die Abströmöffnungen 34.

Die freien Enden der Fortsätze sind nach außen abgewinkelt und bilden im fertigen Deflektorelement 16 abgewinkelte freie Enden 42 der Befestigungsarme 40 (siehe Figur 3).

Der rechteckige Abschnitt wird um die mittig zwischen den langen Seiten verlaufende Scheitellinie 36 gebogen, sodass die gebogene Ablenkfläche 30 entsteht. Dabei werden die Befestigungsarme 40 aufeinander zu bewegt, bis sie annähernd parallel zueinander liegen.

In einem Schnitt quer zur Axialrichtung A auf Höhe der Befestigungsarme 40 hat somit das Deflektorelement 16 in etwa die Form eines Ω (siehe Figur 3).

Zur Montage des Deflektorelements 16 an der Abdeckkappe 14 werden die Befestigungsarme 40 und/oder die Seitenflächen 38 durch Aufbringen einer vorgegebenen Montagekraft aufeinander zu bewegt, sodass ein Abstand zwischen den abgewinkelten freien Enden 42 gegenüberliegender Befestigungsarme 40 soweit reduziert wird, dass beide Befestigungsarme 40 durch die Ausströmöffnung 28 von außen geschoben werden können. Die Seitenflächen 38 und/oder die Befestigungsarme 40 stehen dabei unter einer voneinander weg wirkenden Vorspannung.

Die Montagekraft wird dann aufgehoben, insbesondere, indem sie kontinuierlich reduziert wird, wodurch sich die abgewinkelten freien Enden 42 der Befestigungsarme 40 aufgrund der Vorspannung wieder auseinanderspreizen und voneinander weg bewegen, bis sie gegen einen Rand 44 der Ausströmöffnung 28, genauer gegen zwei gegenüberliegende Randabschnitte des Rands 44, gedrückt werden. Dabei hintergreifen die abgewinkelten freien Enden 42 den Rand 44 der Ausströmöffnung 28 an der Innenseite der Umfangswand 26 und verriegeln das Deflektorelement 16.

Durch das Hintergreifen des Randes 44 durch die abgewinkelten freien Enden 42 und gegebenenfalls die Anlage der Befestigungsarme 40 am Rand 44 der Ausströmöffnung 28 ist ein Formschluss zwischen dem Deflektorelement 16 und der Abdeckkappe 14 gebildet, der das Deflektorelement 16 auch bei Aktivierung des Rohrgasgenerators 12 und der damit verbundenen Erhöhung des Innendrucks im Innenraum 24 durch den abströmenden Gasstrom fest an der Abdeckkappe 14 hält.

In dem hier gezeigten Beispiel haben die Befestigungsarme 40 und insbesondere die abgewinkelten freien Enden 42 in Axialrichtung A dieselbe Abmessung wie die lange Seite der Ausströmöffnung 28, sodass die abgewinkelten freien Enden 42 in Axialrichtung A über die ganze Länge der jeweiligen Randabschnitte am Rand 44 der Ausströmöffnung 28 anliegen.

Eine zusätzliche Fixierung des Deflektorelements 16 an der Abdeckkappe 14 ist hier nicht vorgesehen.

Es ist auch denkbar, die abgewinkelten freien Enden 42 der Befestigungsarme 40 so auszubilden, dass der Formschluss selbstständig durch eine Rastverbindung hergestellt wird, wenn die Befestigungsarme 40 von außen durch die Ausströmöffnung 28 geschoben werden, wobei der Rand 44 der Ausströmöffnung 28 zunächst die Befestigungsarme 40 nach innen auslenkt und diese wieder zurückfedern, wenn die abgewinkelten freien Enden 42 den Rand 44 passiert haben und dann den Rand 44 innenseitig hintergreifen (nicht dargestellt).

Bei dieser Ausführungsform liegen im montierten Zustand die freien Ränder 45 der Seitenflächen auf beiden Seiten der Befestigungsarme 40 auf der Umfangswand 26 der Abdeckkappe 14 auf und schließen so den Hohlraum 32 ab.

Zur Montage der Baugruppe 10 am Rohrgasgenerator 12 wird zunächst die Abdeckkappe 14 ohne das Deflektorelement 16 mit dem offenen Ende 18 über den Diffusor am axialen Ende 22 des Rohrgasgenerators 12 geschoben, und das offene Ende 18 der Abdeckkappe 14 wird fest und insbesondere gasdicht mit einer Außenwandung des Rohrgasgenerators 12 verbunden. Dies geschieht beispielsweise durch Rollieren, Krimpen, Bördeln oder Schweißen.

Nachdem die Abdeckkappe 14 fest mit dem Rohrgasgenerator 12 verbunden wurde, wird das Deflektorelement 16 wie oben beschrieben in die Ausströmöffnung 28 eingesetzt,

Bei der Aktivierung des Rohrgasgenerators 12 tritt das Gas aus der oder den Gasauslassöffnungen 25 des Rohrgasgenerators 12 oder dessen Diffusors 23 aus und strömt in den Innenraum 24 der Abdeckkappe 14 und dort über die Sammelkammer durch die Ausströmöffnung 28 der Abdeckkappe 14 in den Hohlraum 32 zwischen der Ablenkfläche 30 des Deflektorelements 16 und der Umfangswand 26 der Abdeckkappe 14. An der Ablenkfläche 30 wird das Gas aus der Radialrichtung r in die Axialrichtung A umgelenkt und verlässt durch die beiden Abströmöffnungen 34 die Baugruppe 10.

In den hier dargestellten Beispielen gelangt das vom Rohrgasgenerator 12 erzeugte Gas ausschließlich durch die beiden Abströmöffnungen 34 in die Umgebung des Rohrgasgenerators 12. Es ist aber auch denkbar, zusätzliche Abströmöffnungen im Deflektorelement 16 oder in der Abdeckkappe 14 vorzusehen. Es ist auch möglich, im Deflektorelement 16 nur eine einzige Abströmöffnung auszubilden.

Jede der Abströmöffnungen 34 kann beispielsweise mit einer einzelnen Kammer eines Gassacks verbunden sein, oder das gesamte Deflektorelement 16 kann im Inneren einer einzigen aufblasbaren Kammer positioniert sein (nicht dargestellt). Jede andere geeignete Anwendung ist natürlich auch denkbar.

In der gerade beschriebenen Ausführungsform sind die Abströmöffnungen 34 in Axialrichtung A gerichtet.

Figur 4 zeigt eine Variante, bei der die Seitenflächen 38 beidseits der Befestigungsarme 40 zu einer umfangsmäßig geschlossenen Röhre umgeformt sind, wobei sich die freien Ränder 45 berühren und der Hohlraum 32 insgesamt von der Umfangswand 26 weg konvex gekrümmt ist. Dies hat zur Folge, dass die beiden Abströmöffnungen 34 schräg zur Axialrichtung A stehen.

Die Ausbildung und Anordnung des Hohlraums 32, der Seitenflächen 38 und der Abströmöffnungen 34 liegt im Ermessen des Fachmanns und lässt sich einfach auf unterschiedliche Anwendungszwecke anpassen.

Derartige Varianten lassen sich stets mit identischen Befestigungsarmen 40 versehen, sodass auch bei der Verwendung unterschiedlicher Deflektorelemente 16 stets eine identisch geformte Abdeckkappe 14 verwendet werden kann.

Bei den bisher beschriebenen Varianten sind beide Abströmöffnungen 34 in ihrer Querschnittsfläche gleich gewählt, sodass die dort ausströmenden Gasströme G jeweils dieselbe Gasmenge umfassen.

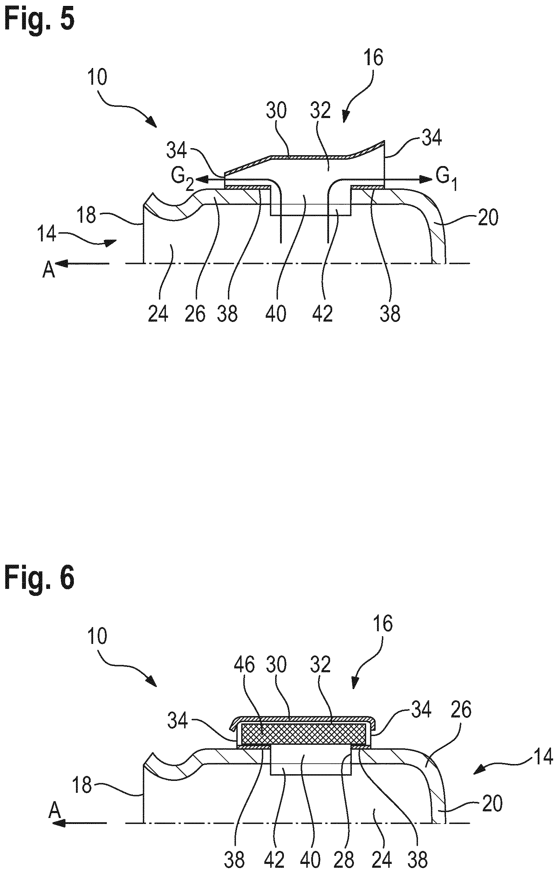

Figur 5 zeigt eine Variante, bei der die Querschnittsfläche der Abströmöffnungen 34 ungleich gewählt ist, sodass Gasströme G₁, G₂ mit unterschiedlichen Gasmengen resultieren.

Die Aufteilung kann beispielsweise im Verhältnis 60/40 oder 70/30 oder in einem beliebigen anderen Verhältnis gewählt werden.

Die Querschnittsformen der Abströmöffnungen 34 lassen sich auf einfache Weise durch eine entsprechende Formgebung der Ablenkfläche 30 und insbesondere der Seitenflächen 38 erreichen.

Figur 6 zeigt eine weitere Variante, bei der in den Hohlraum 32 ein Filter 46 eingesetzt ist, der das durch die Ausströmöffnung 28 in den Hohlraum 32 strömende Gas beispielsweise von Partikeln befreit oder dieses kühlt.

Der Filter 46 umfasst z.B. auf bekannte Weise ein Maschengestrick und oder Siebe aus einem geeigneten Metall.

Der Filter 46 kann entweder vor der Montage des Deflektorelement 16 an der Abdeckkappe 14 oder nach der Montage des Deflektorelement 16 in den Hohlraum 32 eingesetzt werden.

Auch bei den Varianten nach den Figuren 5 und 6 sind die freien Ränder 45 der Seitenflächen 38 in Axialrichtung A beidseits der Befestigungsarme 40 jeweils so weit aufeinander zu gebogen, dass sie sich berühren, sodass die Abströmöffnungen 34 durch die Enden von im Wesentlichen umfangsmäßig geschlossenen Röhren gebildet ist.

Figur 7 zeigt eine weitere Variante, bei der zwei in Axialrichtung A nebeneinanderliegende Ausströmöffnungen 28 in der Umfangswand 26 der Abdeckkappe 14 vorgesehen sind, die durch einen Mittelsteg 48 voneinander getrennt sind.

Das Deflektorelement 16 weist in diesem Fall insgesamt vier Befestigungsarme 40 auf, von denen jeweils zwei an den gegenüberliegenden Seitenflächen 38 jeweils auf axialer Höhe der Ausströmöffnungen 28 angeordnet sind. Wird das Deflektorelement 16 an der Abdeckkappe 14 montiert, so greifen jeweils die benachbarten Befestigungsarme 40 auf einer Seite in die beiden nebeneinanderliegenden Ausströmöffnungen 28, sodass im montierten Zustand in Axialrichtung Ader Mittelsteg 48 zwischen den Befestigungsarmen 40 liegt.

Natürlich wäre es auch denkbar, dieses Konzept auf drei oder mehr nebeneinanderliegende Ausströmöffnungen 28 auszudehnen.

In Figur 8 ist eine Einheit aus Rohrgasgenerator 12 mit einer Baugruppe 10 gezeigt.

Figur 8 verdeutlicht, wie die Abdeckkappe 14 auf das axiale Ende 22 des Rohrgasgenerators 12 aufgesetzt und mit diesem verbunden ist, sodass der Rohrgasgenerator 12 und die Baugruppe 10 eine gemeinsame Einheit bilden.

Dieselbe Anordnung ist auch mit einer Baugruppe 10 nach den Figuren 1 bis 7 möglich.

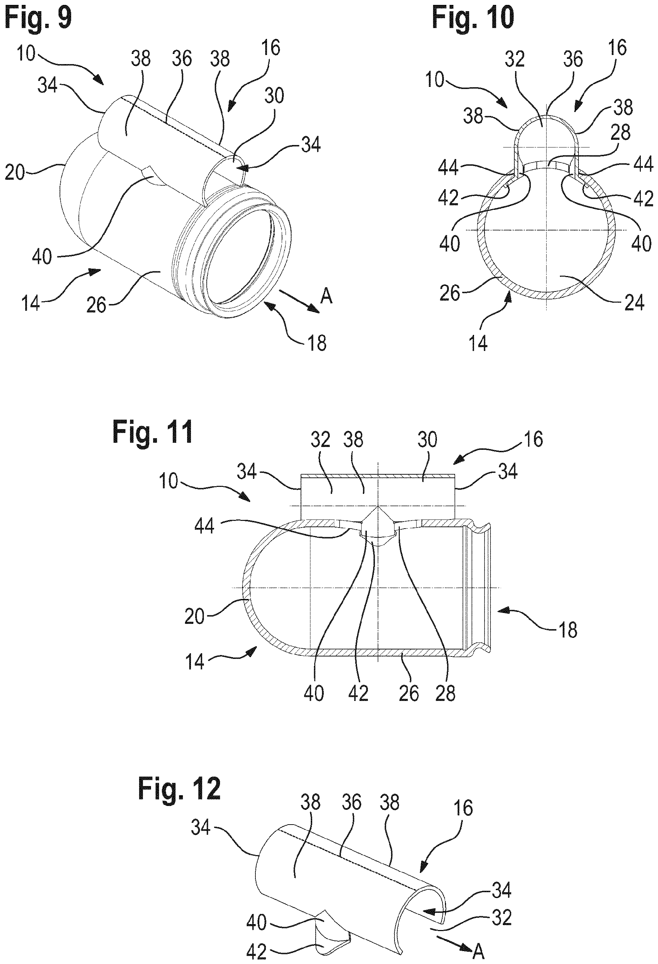

Die Figuren 9 bis 11 zeigen die Baugruppe 10 gemäß der zweiten Ausführungsform, wobei das Deflektorelement 16 in die Ausströmöffnung 28 der Abdeckkappe 14 eingesetzt ist.

Im Gegensatz zur ersten Ausführungsform wird das Deflektorelement 16 am Rand 44 der Ausströmöffnung 28 mittels einer Bajonettverbindung fixiert.

Hierzu sind die Befestigungsarme 40 in Axialrichtung A schmaler gewählt als in der ersten Ausführungsform, insbesondere gleichlang oder schmaler als eine kurze Seite der Ausströmöffnung 28. Außerdem sind die abgewinkelten freien Enden 42 gerundet.

Generell kann das Deflektorelement 16 starrer sein als in der ersten Ausführungsform. Insbesondere ist eine federnde Spannung wie in der ersten Ausführungsform hier nicht notwendig.

Zur Montage wird das Deflektorelement 16 zunächst um 90° gegenüber der Axialrichtung A gedreht, sodass die freien Enden 42 der beiden Befestigungsarme 40 möglichst ohne große Verformung des Deflektorelements 16 von außerhalb der Abdeckkappe 14 in die Ausströmöffnung 28 eingesetzt werden können. Dann wird das Deflektorelement 16 um 90° gedreht, sodass die Scheitellinie 36 in Axialrichtung A ausgerichtet ist. Dabei kommen die abgewinkelten freien Enden 42 innenseitig in Anlage an die Umfangswand 26 der Abdeckkappe 14 und hintergreifen den Rand 44 der Ausströmöffnung 28.

Im montierten Zustand erstrecken sich die Ablenkfläche 30 des Deflektorelements 16 sowie der darunterliegende Hohlraum 32 wie in der ersten Ausführungsform entlang der Axialrichtung A radial oberhalb der Ausströmöffnung 28.

Generell können sämtliche hier gezeigten Konzepte im Ermessen des Fachmanns problemlos miteinander kombiniert werden. So kann beispielsweise ein Filter 46 mit sämtlichen Deflektorelementen 16 verwendet werden. Auch ist es möglich, bei jedem der gezeigten Deflektorelementen die Querschnittsfläche der Abströmöffnungen 34 unterschiedlich zu wählen oder deren Richtung bezüglich der Axialrichtung A zu verändern.

## Patentansprüche

1. Baugruppe (10) aus einer Abdeckkappe (14) eines Rohrgasgenerators (12) und einem Deflektorelement (16), das aus wenigstens einer Ausströmöffnung (28) der Abdeckkappe (14) ausströmendes Gas zu wenigstens einer Abströmöffnung (34) des Deflektorelements (16) umleitet, wobei eine Ablenkfläche (30) des Deflektorelements (16) radial auswärts der Ausströmöffnung (28) angeordnet ist und sich wenigstens zwei Befestigungsarme (40) des Deflektorelements (16) durch die Ausströmöffnung (28) hindurch erstrecken und einen die Ausströmöffnung (28) definierenden Rand (44) in einer formschlüssigen Verbindung mit der Abdeckkappe (14) innenseitig hintergreifen.

2. Baugruppe (10) nach Anspruch 1, **dadurch gekennzeichnet, dass** die formschlüssige Verbindung eine Rastverbindung und/oder eine Bajonettverbindung ist.

3. Baugruppe (10) nach einem der vorhergehenden Ansprüche, **dadurch gekennzeichnet, dass** die freien Enden (42) der Befestigungsarme (40) abgewinkelt sind und am Rand (44) der Ausströmöffnung (28) an einer Innenseite einer Wandung der Abdeckkappe (14) anliegen.

4. Baugruppe (10) nach einem der vorhergehenden Ansprüche, **dadurch gekennzeichnet, dass** die Ablenkfläche (30) bogen- oder rinnenförmig ist.

5. Baugruppe (10) nach einem der vorhergehenden Ansprüche, **dadurch gekennzeichnet, dass** sich Seitenflächen (38) der Ablenkfläche (30) beidseits einer Scheitellinie (36) der Ablenkfläche (30) erstrecken, wobei die Scheitellinie (36) in Axialrichtung (A) der Abdeckkappe (14) verläuft.

6. Baugruppe (10) nach Anspruch 5, **dadurch gekennzeichnet, dass** die Seitenflächen (38) in die Befestigungsarme (40) übergehen.

7. Baugruppe (10) nach einem der vorhergehenden Ansprüche, **dadurch gekennzeichnet, dass** das Deflektorelement (16) aus einem umgeformten Blech besteht.

8. Baugruppe (10) nach einem der vorhergehenden Ansprüche, **dadurch gekennzeichnet, dass** die Befestigungsarme (40) voneinander weg gegen den Rand (44) der Ausströmöffnung (28) drücken und/oder dort angreifen.

9. Baugruppe (10) nach einem der vorhergehenden Ansprüche, **dadurch gekennzeichnet, dass** das Deflektorelement (16) eine langgestreckte Gestalt hat und an seinen beiden axialen Enden offen ist, sodass an jedem axialen Ende eine Abströmöffnung (34) gebildet ist.

10. Baugruppe (10) nach Anspruch 9, **dadurch gekennzeichnet, dass** die Querschnittsflächen der beiden Abströmöffnungen (34) unterschiedlich ist.

11. Baugruppe (10) nach einem der vorhergehenden Ansprüche, **dadurch gekennzeichnet, dass** zwischen der Ausströmöffnung (28) der Abdeckkappe (14) und der wenigstens einen Abströmöffnung (34) des Deflektorelements (16) ein Filter (46) angeordnet ist. und/oder dass die Abdeckkappe (14) einen Diffusor (23) mit Abstand umgibt.

12. Baugruppe (10) nach einem der vorhergehenden Ansprüche, **dadurch gekennzeichnet, dass** zwei durch einen Mittelsteg (48) voneinander getrennte Ausströmöffnungen (28) vorgesehen sind und das Deflektorelement (16) wenigstens vier Befestigungsarme (40) aufweist, wobei jeweils zwei benachbarte Befestigungsarme (40) beidseits des Mittelstegs (48) am Rand (44) der jeweiligen Ausströmöffnung (28) angreifen.

13. Rohrgasgenerator (12) mit wenigstens einer an einem axialen Ende (22) vorgesehenen Gasauslassöffnung und einer Baugruppe (10) nach einem der vorhergehenden Ansprüche, wobei die Abdeckkappe (14) das axiale Ende (22) umgreifend am Rohrgasgenerator (12) fixiert ist und eine Sammelkammer zwischen der wenigstens einen Gaauslassöffnung und der Abdeckkappe (14) gebildet ist, durch die Gas zum Deflektorelement (16) strömt.

14. Verfahren zur Fertigung eines Rohrgasgenerators (12) nach Anspruch 13 mit den Schritten:
- die Abdeckkappe (14) wird an einem axialen Ende (22) des Rohrgasgenerators (12) fest fixiert,
- anschließend wird das Deflektorelement (16) von einer Außenseite der Abdeckkappe (14) aus mit seinen Befestigungsarmen (40) durch die Ausströmöffnung (28) geschoben,
- wobei die Befestigungsarme (40) eine formschlüssige Verbindung mit dem Rand (44) der Ausströmöffnung (28) eingehen, die das Deflektorelement (16) fest an der Abdeckkappe (14) fixiert.

15. Verfahren nach Anspruch 14, **dadurch gekennzeichnet, dass** die Befestigungsarme (40) vor dem Einschieben in die Ausströmöffnung (28) durch eine Krafteinwirkung aufeinander zu bewegt und dabei elastisch verformt werden und nach Ende der Krafteinwirkung wieder auseinander federn oder dass die Befestigungsarme (40) in einer ersten Orientierung in die Ausströmöffnung (28) eingeschoben werden und anschließend unter Herstellung einer Bajonettverbindung um einen vorgegebenen Winkel in eine zweite Orientierung gedreht werden.

## Claims

1. An assembly group (10) consisting of a cap (14) of a tubular gas generator (12) and a deflector element (16) that deflects gas flowing out of at least one outflow opening (28) of the cap (14) to at least one discharge opening (34) of the deflector element (16), wherein a deflection surface (30) of the deflector element (16) is arranged radially outwardly of the outflow opening (28) and at least two securing arms (40) of the deflector element (16) extend through the outflow opening (28) and engage behind an edge (44) defining the outflow opening (28) in a positive connection with the cap (14) on the inside.

2. The assembly group (10) according to claim 1, **characterized in that** the positive connection is a click-lock and/or a bayonet lock.

3. The assembly group (10) according to any one of the preceding claims, **characterized in that** the free ends (42) of the securing arms (40) are bent and are adjacent to the edge (44) of the outflow opening (28) on an inner face of a wall of the cap (14).

4. The assembly group (10) according to any one of the preceding claims, **characterized in that** the deflection surface (30) is curved or grooved.

5. The assembly group (10) according to any one of the preceding claims, **characterized in that** lateral faces (38) of the deflection surface (30) extend on both sides of a crown line (36) of the deflection surface (30), the crown line (36) extending in the axial direction (A) of the cap (14).

6. The assembly group (10) according to claim 5, **characterized in that** the lateral faces (38) merge into the securing arms (40).

7. The assembly group (10) according to any one of the preceding claims, **characterized in that** the deflector element (16) is made from a formed sheet metal.

8. The assembly group (10) according to any one of the preceding claims, **characterized in that** the securing arms (40) urge away from each other against the edge (44) of the outflow opening (28) and/or act upon the latter.

9. The assembly group (10) according to any one of the preceding claims, **characterized in that** the deflector element (16) has an elongate shape and is open at both of its axial ends so that a discharge opening (34) is formed at each axial end.

10. The assembly group (10) according to claim 9, **characterized in that** the cross-sectional areas of the two discharge openings (34) are different.

11. The assembly group (10) according to any one of the preceding claims, **characterized in that** a filter (46) is interposed between the outflow opening (28) of the cap (14) and the at least one discharge opening (34) of the deflector element (16), and/or **in that** the cap (14) surrounds a diffusor (23) at a distance.

12. The assembly group (10) according to any one of the preceding claims, **characterized in that** two outflow openings (28) separated from each other by a central web (48) are provided and the deflector element (16) includes at least four securing arms (40), wherein two adjacent securing arms (40) act on both sides of the central web (48) upon the edge (44) of the respective outflow opening (28).

13. A tubular gas generator (12) comprising at least one gas outlet opening provided at an axial end (22) and an assembly group (10) according to any one of the preceding claims, wherein the cap (14) is fixed to the tubular gas generator (12) while it encompasses the axial end (22), and a collecting chamber is formed between the at least one gas outlet opening and the cap (14) through which gas flows toward the deflector element (16).

14. A method for manufacturing a tubular gas generator (12) according to claim 13, comprising the following steps:
- the cap (14) is firmly fixed to an axial end (22) of the tubular gas generator (12),
- subsequently the deflector element (16) is slid from an outer side of the cap (14) with its securing arms (40) through the outflow opening (28),
- wherein the securing arms (40) form a positive connection with the edge (44) of the outflow opening (28) which fixes the deflector element (16) firmly to the cap (14).

15. The method according to claim 14, **characterized in that** the securing arms (40) are moved toward each other, before they are slid into the outflow opening (28), by application of force while being elastically deformed, and spring apart again when the application of force is stopped, or **in that** the securing arms (40) in a first orientation are slid into the outflow opening (28) and are subsequently rotated by a predetermined angle into a second orientation while forming a bayonet lock.

## Revendications

1. Ensemble (10) composé d'un couvercle (14) d'un générateur de gaz tubulaire (12) et d'un élément déflecteur (16) qui dévie le gaz sortant d'au moins une ouverture d'écoulement (28) du couvercle (14) vers au moins une ouverture de sortie (34) de l'élément déflecteur (16), pour lequel une surface déflectrice (30) de l'élément déflecteur (16) est disposée radialement vers l'extérieur de l'ouverture d'écoulement (28) et au moins deux bras de fixation (40) de l'élément déflecteur (16) s'étendent à travers l'ouverture d'écoulement (28) et maintiennent par l'arrière, côté intérieur, un bord (44) définissant l'ouverture de sortie (28) par une liaison de forme avec le couvercle (14).

2. Ensemble (10) selon la revendication 1, **caractérisé en ce que** la liaison de forme est une liaison par encliquetage et/ou une liaison à baïonnette.

3. Ensemble (10) selon l'une des revendications précédentes, **caractérisé en ce que** les extrémités libres (42) des bras de fixation (40) sont coudées et s'appuient sur le bord (44) de l'ouverture d'écoulement (28) sur une face intérieure d'une paroi du couvercle (14).

4. Ensemble (10) selon l'une des revendications précédentes, **caractérisé en ce que** la surface déflectrice (30) est en forme d'arc ou de gouttière.

5. Ensemble (10) selon l'une des revendications précédentes, **caractérisé en ce que** des faces latérales (38) de la surface déflectrice (30) s'étendent de part et d'autre d'une ligne de crête (36) de la surface déflectrice (30), pour lequel la ligne de crête (36) s'étend dans la direction axiale (A) du couvercle (14).

6. Ensemble (10) selon la revendication 5, **caractérisé en ce que** les faces latérales (38) se prolongent par les bras de fixation (40).

7. Ensemble (10) selon l'une des revendications précédentes, **caractérisé en ce que** l'élément déflecteur (16) est constitué d'une tôle déformée.

8. Ensemble (10) selon l'une des revendications précédentes, **caractérisé en ce que** les bras de fixation (40) s'écartent l'un de l'autre en s'appuyant contre le bord (44) de l'ouverture d'écoulement (28) et/ou en s'y engageant.

9. Ensemble (10) selon l'une quelconque des revendications précédentes, **caractérisé en ce que** l'élément déflecteur (16) a une forme allongée et est ouvert à ses deux extrémités axiales, de sorte qu'un orifice d'écoulement (34) est formé à chaque extrémité axiale.

10. Ensemble (10) selon la revendication 9, **caractérisé en ce que** les surfaces de section transversale des deux ouvertures d'écoulement (34) sont différentes.

11. Ensemble (10) selon l'une des revendications précédentes, **caractérisé en ce qu'**un filtre (46) est disposé entre l'ouverture d'écoulement (28) du couvercle (14) et l'au moins une ouverture de sortie (34) de l'élément déflecteur (16) et/ou **en ce que** le couvercle (14) entoure un diffuseur (23) à distance.

12. Ensemble (10) selon l'une des revendications précédentes, **caractérisé en ce qu'**il est prévu deux ouvertures d'écoulement (28) séparées l'une de l'autre par une barrette centrale (48) et **en ce que** l'élément déflecteur (16) présente au moins quatre bras de fixation (40), pour lequel chaque paire de bras de fixation (40) voisins s'engagent respectivement de part et d'autre de la barrette centrale (48) sur le bord (44) de l'ouverture d'écoulement (28) correspondante.

13. Générateur de gaz tubulaire (12) avec au moins une ouverture de sortie de gaz prévue à une extrémité axiale (22) et un ensemble (10) selon l'une des revendications précédentes, pour lequel le couvercle (14) est fixé au générateur de gaz tubulaire (12) en entourant l'extrémité axiale (22) et une chambre collectrice est formée entre la au moins une ouverture d'écoulement du gaz et le couvercle (14), à travers laquelle le gaz s'écoule vers l'élément déflecteur (16).

14. Procédé de fabrication d'un générateur de gaz tubulaire (12) selon la revendication 13, comprenant les étapes :
- le couvercle (14) est fixé fermement à une extrémité axiale (22) du générateur de gaz tubulaire (12),
- ensuite, l'élément déflecteur (16) est poussé par ses bras de fixation (40) à travers l'ouverture d'écoulement (28) à partir d'un côté extérieur du couvercle (14),
- pour lequel les bras de fixation (40) forment une liaison de forme avec le bord (44) de l'ouverture d'écoulement (28), laquelle fixe fermement l'élément déflecteur (16) sur le couvercle (14).

15. Procédé selon la revendication 14, **caractérisé en ce que** les bras de fixation (40) sont rapprochés l'un de l'autre par une force avant d'être insérés dans l'ouverture d'écoulement (28) et sont ainsi déformés élastiquement, puis s'écartent à nouveau élastiquement après la fin de l'action de la force, ou **en ce que** les bras de fixation (40) sont insérés dans l'ouverture d'écoulement (28) dans une première orientation et sont ensuite tournés d'un angle prédéfini dans une deuxième orientation en réalisant une liaison à baïonnette.
